# EUROPEAN PATENT APPLICATION

(11) **EP 3 825 551 A1**
(43) Date of publication of application: **26.05.2021**
(21) Application number: 18932076.5
(22) Date of filing: 30.08.2018
(51) Int. Cl.: F03G 3/00, F03G 7/10, H02K 53/00

(54) **TORQUE MULTIPLIER AND ELECTRICAL GENERATOR COMPRISING SAID TORQUE MULTIPLIER ASSOCIATED WITH AN OSCILLATING MASS WITH A VARIABLE CENTRE OF GRAVITY**

(71) Applicant: Predict Consultoria Tecnologia Ltda, Porto Alegre RS (BR)
(72) Inventor: VARGAS, Edison, 96825-140 Santa Cruz Do Sul (BR)
(74) Representative: Sach, Greg Robert
(86) International application number: PCT/BR2018/050309
(87) International publication number: WO 2020/041844

(57) **Abstract**

The present invention relates to a torque multiplier (1) that comprises a movable axle with variable inclination (2) with a specific ball joint terminal (3) that has a mechanical energy source M1 as input and acts as a lever arm, providing, at the other end, an output torque higher than the input torque, which can be used to drive a mechanical device.

## Description

### Technological sector of the invention

The present invention refers to a torque multiplier system with multiple applications, which can be used in power take-offs for agricultural machinery, automotive vehicles, the shipping industry, or any application where it is necessary to multiply force in other functionalities. The novelty of the proposed system comprises using an inclined movable axle with an unprecedented ball joint terminal, which supports any diameter and inclination up to 45 degrees, to connect two mechanical devices, where the axle acts as a lever arm multiplying the torque of the output device in relation to the input device.

The invention also comprises an energy-generation system that operates on the basis of the torque multiplier principles. This system consists of using the same inclined movable axle with the ball joint terminal to connect an oscillating mass at the upper end to an electrical generator at the lower end of the axle. The application of a force to the oscillating mass causes the center of gravity to move off the axis, causing it to move. Therefore, the constant application of this force to the oscillating mass causes the axis to rotate in a continuous movement. Through the aforementioned concept, the torque generated at the output end is much higher than the necessary torque applied to the oscillating mass to keep the axle moving. The variables to enhance torque generation in this system are the axle length and diameter.

### Known state of the art

The state of the art of this technological sector comprises movement transmission mechanisms, such as toothed belts, cardan axle, connecting rod/crank mechanism and aligned gears associated with chains. In conventional transmission systems to increase the speed of the system or to maintain the speed when in a situation of greater effort (for example, on a slope) it is necessary to increase the force.

### Brief description of the drawings

In order for the present invention to be fully understood and carried out by any technician in this technological sector, it will be explained in a clear, precise and sufficient way to allow its reproduction, based on the attached drawings listed below, which are only illustrative of possible and not unique embodiments of the inventive concept revealed in this specification, without intending to limit the scope of the patent:
Figure 1 is a perspective drawing of a preferred embodiment of the torque multiplier.
Figure 2 is a perspective drawing of the ball joint terminal of the invention.
Figure 3 is a top view drawing of the ball joint terminal shown in Figure 3.
Figure 4 is a perspective drawing of a first embodiment of an energy-generation system based on the torque multiplier.
Figure 5 is a side view drawing of the first embodiment of an energy-generation system based on the torque multiplier.
Figure 6 is a top view drawing of the first embodiment of an energy-generation system based on the torque multiplier.
Figure 7 is a rear-view drawing of the first embodiment of an energy-generation system based on the torque multiplier.
Figure 8 is a perspective drawing of a second embodiment of an energy-generation system based on the torque multiplier.
Figure 9 is a side view drawing of the second embodiment of an energy-generation system based on the torque multiplier.
Figure 10 is a top view drawing of the second embodiment of an energy-generation system based on the torque multiplier.

### Detailed description of the

### invention

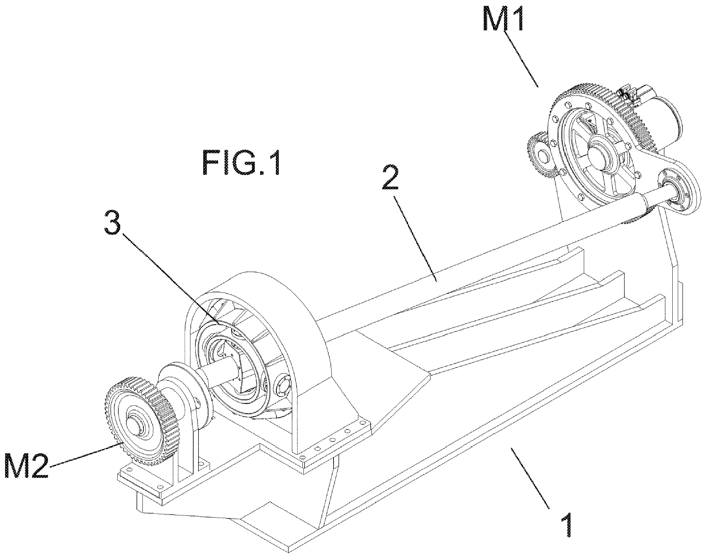

Referring to figure 1, the invention described and revealed in this specification refers to a torque multiplier (1) comprising a movable axle of variable inclination (2) with a specific ball joint terminal (3), which connects a first source of mechanical energy M1 and acts as a lever arm, providing at the other end an output torque higher than the input torque, which can be used to drive a mechanical device at the output M2.

This conception presents a great advantage in relation to the existing conventional mechanism, the possibility of increasing the speed of the driven system without the need to increase the applied force or maintain the speed of the system in a situation of greater effort, such as maintaining the speed of a car on a slope using the same torque or cycling uphill with the same force used to cycle on the flat. This occurs by increasing the length and / or diameter of the axle, which acts as a lever arm, multiplying the torque generated at the system output.

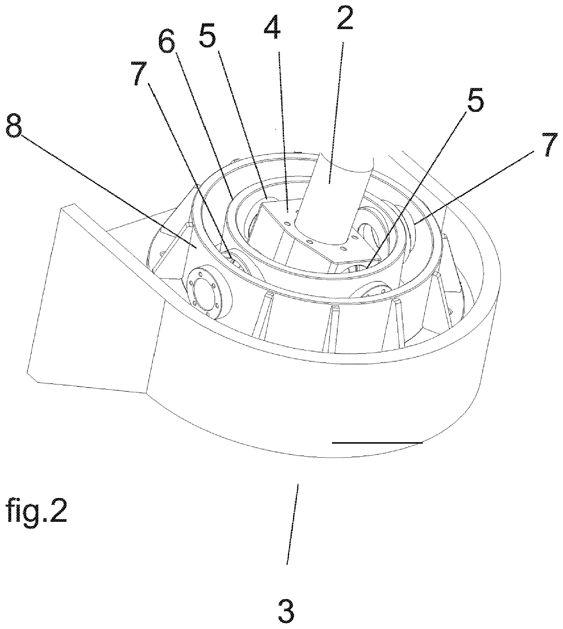

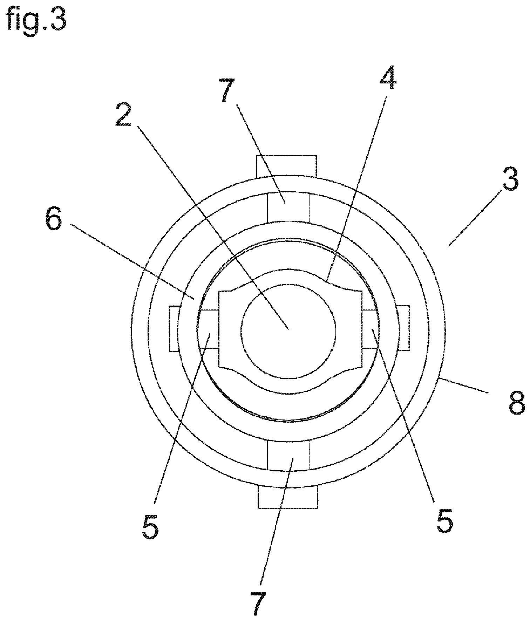

In a preferred embodiment of the invention, the movable axle of variable inclination (2) is associated with a ball joint terminal (3) that supports any diameter and allows inclination of up to 45 degrees, to connect two mechanical devices, allowing the axle (2) to act as a lever arm and multiply the torque of the output device in relation to the input device. As can be seen in figures 2 and 3, the ball joint terminal (3) comprises a central connector (4), in which the axle (2) is fixed, rotatably mounted on two aligned external diameters axles (5), structured in an intermediate ring (6), also associated with two aligned external diametric axles (7), perpendicularly arranged in relation to the previous ones and structured in an external ring (8). This construction allows the axle (2) coupled to said terminal (3) to assume the range of inclinations necessary for the operation of the present invention.

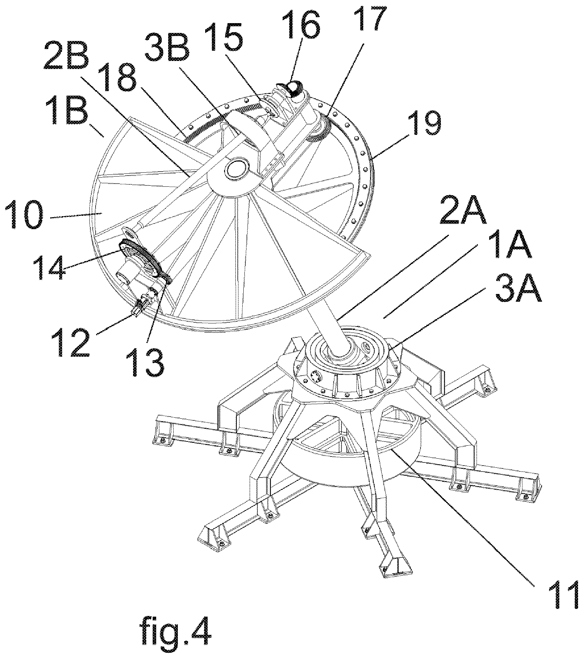

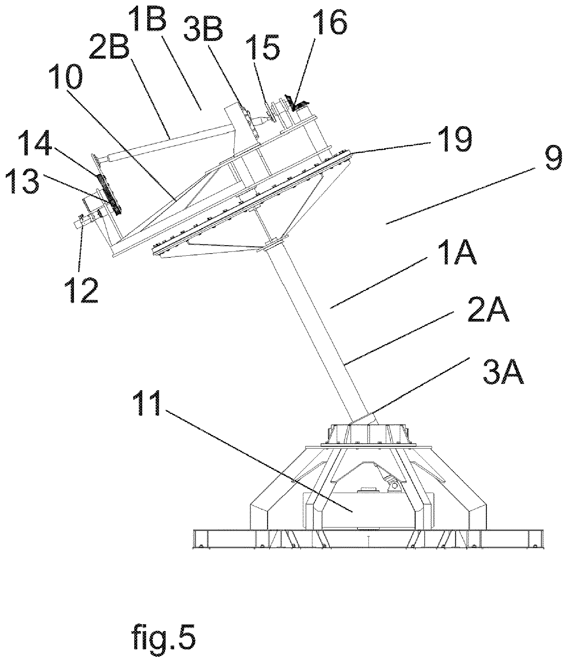

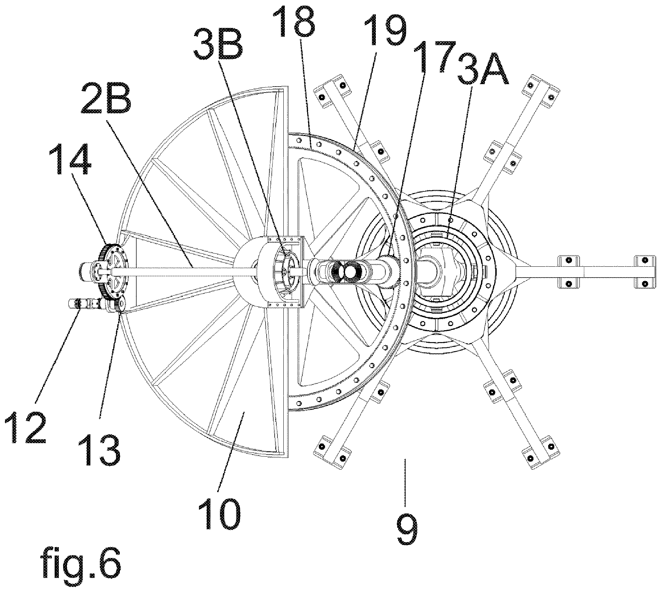

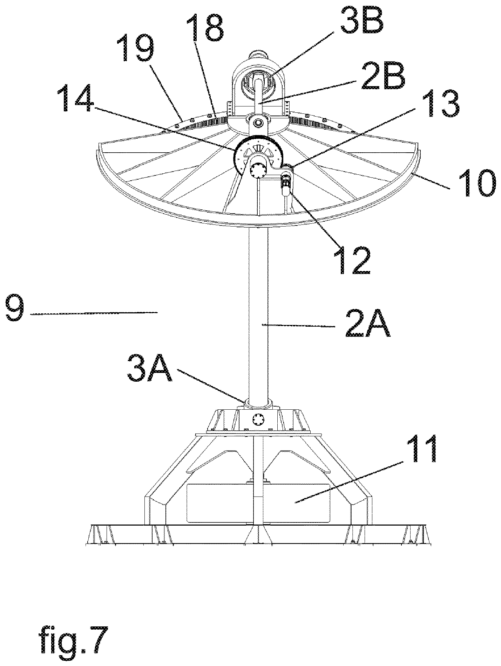

The present invention further comprises an energy-generation system that employs the principles of the torque multiplier. A first embodiment of this energy-generation system (9) is shown in figures 4 to 7.

This system consists of an axle (2A) associated with a ball joint terminal (3A), featuring a first torque multiplier (1A) having an oscillating mass (10) on the end thereof. The rotation of the mass (10) generates the continuous displacement of its center of gravity and provides the constant movement of the movable axle (2A). The movement of the axle (2A) associated with the connector (3A) multiplies the torque on the other end of said axle (2A), which is coupled to a generator (11), in order to actuate same.

The oscillating mass (10) is set in motion by a second torque multiplier (1B), the output of which is applied to said oscillating mass (10). In an embodiment of the invention, the input of the torque multiplier (1B) is provided by a motor (12) that by means of a smaller gear (13) turns a larger gear (14) that turns the end of an axle (2B), associated with a ball joint terminal (3B). The other end of said axle (2B) is associated with a disc (15) (or gear - as shown in figure 1) parallel to the first gear (14). By the principle explained above, this output has a torque multiplied in relation to the first gear (14). This multiplied torque is used in the transmission mechanism to obtain the movement of the oscillating mass (10).

In the preferred embodiment of the invention illustrated in figures 4 to 7, the transmission mechanism consists of two conical gears (16) coupled to an axle (hidden in the structure shown), associated at its other end to a gear (17) that cooperates with dentations (18) existing on a fixed base (19), on which the rotating mass (10) is arranged, providing the rotation of said mass (10) on the base (19).

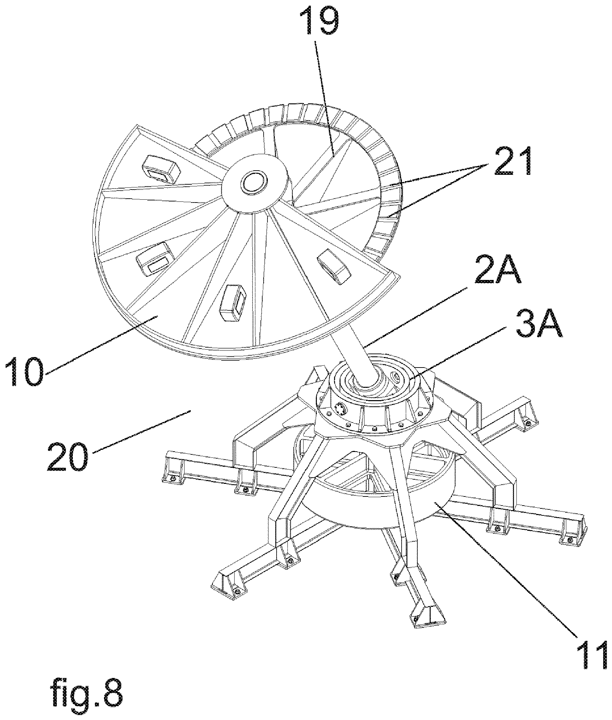

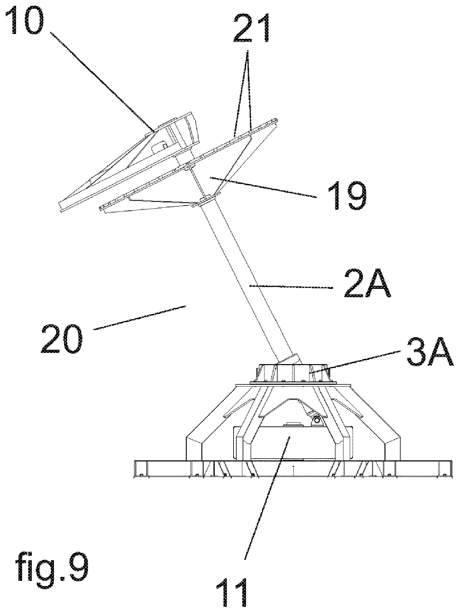

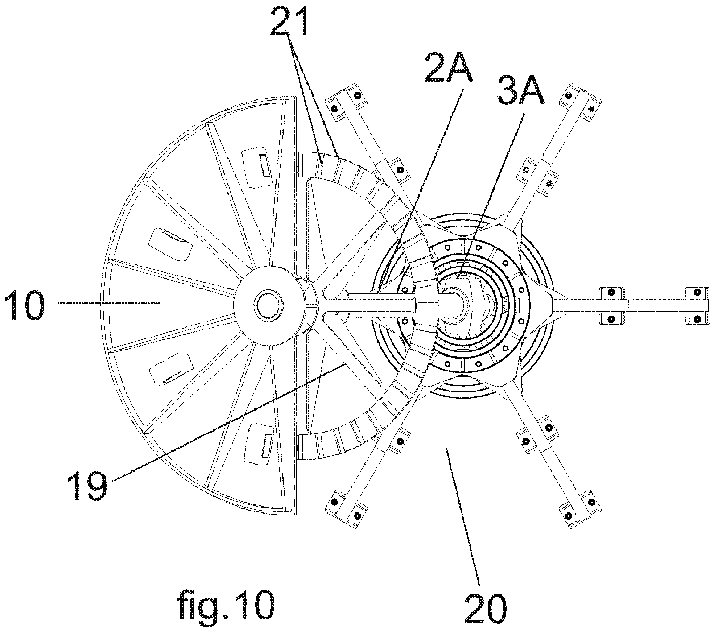

Figures 8 to 10 show another embodiment of the energy-generating system (20), which differs from the previous embodiment in the way it rotates the oscillating mass (10). In this embodiment, the mass (10) is moved by a set of magnets (21) radially arranged on the fixed base (19), however, the oscillating mass (10) remains coupled to the generator (11) by an axle (2A) to a ball joint terminal (3A), that is, by a torque multiplier of the present invention.

The embodiments disclosed above are only examples of possible ways of putting the invention into practice, however, they are not the only possible ways, merely those considered best by the inventor. Numerous modifications and substitutions can be made without moving away from the scope of the present invention. For example, several other transmission mechanisms could be adopted to transmit the movement of the torque multiplier axle in order to move the oscillating mass over the base.

This specification describes an invention coated with industrial application, novelty and inventive step, all the requirements for receiving the protection sought.

## Claims

1. **TORQUE MULTIPLIER characterized by** comprising a movable axle with variable incline (2) associated with a specific ball joint terminal (3), which supports any diameter and allows inclination of up to 45 degrees of the axle (2), which acts as lever arm, providing at the other end an output torque higher than the input torque.

2. **TORQUE MULTIPLIER** according to claim 1 and further **characterized by** a ball joint terminal (3) comprising of a central connector (4), in which the axle (2) is rotatably mounted on two aligned external diametrical axles (5), structured in an intermediate ring (6), also associated with two aligned external diametric axles (7), perpendicularly arranged in relation to the previous ones and structured in an external ring (8).

3. **ENERGY-GENERATING SYSTEM** using the torque multiplier defined in 1 **characterized by** comprising an axle (2A) associated with a ball joint terminal (3A), in which said axle (2A) has at its end an oscillating mass (10) whose rotation causes the constant displacement of the center of gravity and the constant movement of the movable axle (2A), while the other end of said axle (2A) is coupled to a generator (11), to provide its activation.

4. **ENERGY-GENERATING SYSTEM** according claim 3 and further **characterized by** the oscillating mass (10) be set in motion by a second torque multiplier (1B), the output of which is applied to said oscillating mass (10).

5. **ENERGY-GENERATING SYSTEM** according with claims 3 and 4 and further **characterized in that** the input of the torque multiplier (1B) is provided by a motor (12) that by means of a smaller gear (13) turns a larger gear (14) that turns the axle end (2B).

6. **ENERGY-GENERATING SYSTEM** according with claims 3 and 4 and 5 and further **characterized in that** the other end of said axle (2B) is associated with a disk (15) parallel to the first gear (14), associated with a transmission mechanism to obtain the movement of the oscillating mass (10).

7. **ENERGY-GENERATING SYSTEM** according claim 6 further **characterized by** the transmission mechanism being composed of two conical gears (16) coupled to an axle associated at its other end to a gear (17) that cooperates with dentations (18) existing on a fixed base (19), on which the oscillating mass (10) is arranged, providing the rotation of said mass (10) on the base (19).

8. **ENERGY-GENERATING SYSTEM** according with claim 3 further **characterized in that** the oscillating mass (10) is moved by a set of magnets (21) arranged radially on the fixed base (19).
